# EUROPÄISCHE PATENTSCHRIFT

(11) **EP 2 181 844 B1**
(45) Veröffentlichungstag und Bekanntmachung des Hinweises auf die Patenterteilung: **09.10.2019**
(21) Anmeldenummer: 09010267.4
(22) Anmeldetag: 08.08.2009
(51) Int. Cl.: B32B 27/08, B32B 7/02, B32B 7/12, C08L 67/02

(54) **Thermoplastische Mehrschichtfolie zur Gewebekaschierung und ein Verfahren zu ihrer Herstellung**
Thermoplastic multi-layer film for tissue lamination and a method for production of the same
Feuille multicouche thermoplastique pour le revêtement de tissu et son procédé de fabrication

(30) Priorität: 19.08.2008 DE 102008038375
(43) Veröffentlichungstag der Anmeldung: 05.05.2010
(73) Patentinhaber: Covestro Deutschland AG, 51373 Leverkusen (DE)
(72) Erfinder: Kosthorst, Helge, 29664 Walsrode (DE); Heins, Rüdiger, 21272 Egestorf (DE); Schultze, Dirk, Dr., 29664 Walsrode (DE)
(74) Vertreter: Levpat

(56) Entgegenhaltungen:
- EP-A1- 1 764 212
- EP-A1- 1 884 358
- EP-A2- 0 526 858
- EP-A2- 0 591 782
- EP-A2- 0 754 542
- DE-U1- 29 918 931

## Beschreibung

Diese Erfindung betrifft mindestens zweischichtige flexible, elastische thermoplastische Materialverbunde mit einer niedriger und einer höher erweichenden Seite und deren Herstellung.

Kunststoff-Folien sind in vielen Variationen bekannt. Eine spezielle Ausführungsform sind die Schmelzklebefolien. Schmelzklebefolien, ihre Eigenschaften und Vorteile sowie Verfahren zu ihrer Herstellung aus den gängigen Haftschmelzklebstoffgranulaten oder Pulvern sind beispielsweise in der US 4,379,117 (Grace) oder der DE 2 114 065 (Plate Bonn) beschrieben. Der Einsatz von Schmelzklebefolien ist exemplarisch in der DE 3 911 613 (Audi) dargestellt. Eine generelle Kategorisierung von Klebstoffen läßt sich beispielsweise bei Habenicht: Kleben, Springer Verlag, Berlin 1986, nachlesen. Schmelzklebefolien sind in Ausführungsformen als beidseitig klebefähige Folien aber auch als nur einseitig klebefähige Dublofolien bekannt.

Ein- und mehrschichtige Polyesterblockcopolymer oder Copolyester-Elastomer Folien sind beispielsweise in der US 3,023,192, US 3,651,014, US 3,775,374 oder auch EP 0 591 782 beschrieben. Die elastomeren Polyester-Copolymere sind im allgemeinen Blockcopolymere, deren makroskopische Eigenschaftsbilder sich als Kombination der Eigenschaften der einzelnen blockbildenden Komponenten ergeben. Sie werden üblicherweise in die Stoffklasse der thermoplastischen Elastomere eingeordnet. Eine breite Übersicht über diese Stoffklasse vermittelt Legge in Rubber Chemistry and Technology 62 (1989) 529-547. Nach ISO 18064 wird diese Stoffklasse als thermoplastisches Copolyesterelastomer, kurz TPC, bezeichnet.

Copolyester-Elastomere sind Copolymere, die aus verschiedenen Segmenten aufgebaut sind. In dieser Gruppe werden die mechanischenn Festigkeiten und hohen chemischen Beständigkeiten von hochschmelzenden Polyestern mit dem flexiblen Charakter niedrig schmelzender Polyester oder Polyether verknüpft. Obwohl es für beide Segmenttypen eine nahezu unendliche Vielfalt möglicher unterschiedlicher molekularer Bausteine gibt, werden doch bestimmte Typen bevorzugt eingesetzt. Bei den hochschmelzenden Polyester-Hartsegmenten handelt es sich hierbei um die Ester der Terephthalsäure, im allgemeinen Ethylen- oder Butylen-Terephthalate. Bei den flexibleren Weichsegmenten sind Alkohol-terminierte Adipat-Ester oder die auf Ethylen- und Propylenoxid aber auch Tetrahydrofuran basierenden Glycole beliebte Bausteine.

Einschichtige Folien aus thermoplastischen Polyurethanen (TPU), Verfahren zu ihrer Herstellung sowie ihre Verwendung sind beispielsweise aus EP-A 0 308 683, EP-A 0 526 858, EP 0 571 868 und EP-A 0 603 680 bekannt.

TPU können in Abhängigkeit der eingesetzten Isocyanate aliphatischen oder aromatischen Charakter besitzen. TPU haben üblicherweise einen Block- oder Segmentaufbau. Grundsätzlich unterscheidet man Hartsegmente, gebildet aus den zur Reaktion eingesetzten Diisocyanaten und kurzkettigen Diolen, und Weichsegmente, gebildet aus den langkettigen Diolen und Diisocyanaten.

Hartsegmente steuern die Festigkeit und die oberen Nutzungstemperaturen zu den TPU Eigenschaftsprofilen bei. Geeignete Diisocyanate sind beispielsweise 4,4'-Diphenylmethandiisocyanat, das hydrierte 4,4'-Diphenylmethandiisocyanat, 2,4-Toluoldiisocyanat und Hexamethylendiisocyanat. Kurzkettige Diole sind beispielsweise 1,4-Butandiol, 1,6-Hexandiol, Ethylenglycol und Diethylenglycol.

Weichsegmente entstehen aus der Reaktion von Isocyanatfunktionen mit polymeren Diolen, deren Molekulargewichte typischerweise zwischen 500 und 3000 liegen. Sie steuern die elastischen Eigenschaften und die Kälteflexibilität zu den Materialeigenschaften bei.

Man unterscheidet üblicherweise zwei Hauptgruppen bei den Polyolen, Polyetherdiole und Polyesterdiole. Die Polyetherdiole basieren beispielsweise auf Polytetrahydrofuran, Polyethylenoxid sowie Polypropylenoxid und deren Gemische. Die Polyesterdiole basieren typischerweise auf Adipaten, wie z.B. 1,4-Butandioladipat und 1,6-Hexandioladipat und Caprolacton. Cokondensate sind ebenfalls möglich.

Als nach dem Stand der Technik bekannte Dublofolien werden Folien bezeichnet, die aus mindestens einer warmklebrigen, niedrig erweichenden Schicht eines Polymerharzes und wenigstens einer höher erweichenden Schicht eines zweiten Polymerharzes bestehen. Folienaufbauten, die aus mindestens einer niedrig erweichenden und einer höher erweichenden Schicht bestehen, sind aus dem Bereich der Verpackung insbesondere der Lebensmittelverpackung, bekannt. Die dort eingesetzten Folien sind meist aus Polyolefinen, die nur eine geringe Warmklebrigkeit besitzen, hergestellt. Im Unterschied zum Einsatz von Dublofolien, bei dem eine Verbindung einer einseitig klebenden Folie mit einem i.a. nicht klebenden Substrat erfolgt, werden bei der Verwendung siegelfähiger Verpackungen zwei Siegelschichten miteinander verschweißt.

Dublofolien unterscheiden sich damit von Haftklebefilmen, aufgebaut aus einer Trägerschicht, die mit reinem Haftklebstoff beschichtet sind, wie sie bespielsweise in der WO 92/22619 (Minnesota Mining and Manufacturing Company) beschrieben sind, bieten eine zu geringe Klebkraft nicht nur bei erhöhten Temperaturen und können zudem zu leicht von dem Substrat abgelöst werden.

Bekannte Anwendungsgebiete für Dublofolien sind die Verhautung von porösen Gebilden wie beispielsweise Schaumstoffen, Webwaren und Vliesen. Diese Verhautung dient i.a. der Herstellung einer glatten Oberfläche und damit dem Schutz gegen das Eindringen oder Durchtreten von Fluiden, meistens dem Schutz vor Wasser. So lassen sich Schaumsysteme durch Verhautung u.a. vor Verrottung schützen. Ferner können so verhautete Gebilde einfach bedruckt oder lackiert werden, was bei porösen Oberflächen nur schwer möglich ist.

Für technische Anwendungen sind die Eigenschaften der weit verbreiteten und preiswerten nicht modifizierten Polyolefine oft nicht ausreichend, so dass auf Dublofolien aus technischen Thermoplasten wie Polyamiden, Polyestern oder auch Kombinationen aus ihnen zurückgegriffen werden muss. Dies ist insbesondere dann der Fall, wenn Substrate mit polaren Oberflächen abgedeckt werden sollen oder wenn neben den adhäsiven Klebstoffeigenschaften auch die kohäsiven Werkstoffcharakteristika des Klebers von entscheidender Bedeutung sind. Sollen die Dublofolien zudem noch elastische Eigenschaften besitzen, wird für die im höheren Temperaturbereich erweichende Schicht gerne auf Polymerharze aus der Gruppe der thermoplastischen Polyelastomere (TPE) zurückgegriffen.

Für die bekannten elastischen Dublofolien aus thermoplastischen Materialien werden als höher erweichende Schicht gerne TPC eingesetzt, die ein breites Spektrum relevanter Eigenschaften wie eine hohe Abriebfestigkeit und hohe Reißfestigkeit bei zugleich hoher Reißdehnung und gutem Rückstellvermögen bieten. Als höher erweichende Schicht von Dublofolien eignen sich prinzipiell die am Markt erhältlichen TPC, insbesondere die TPC die bereits heute für einschichtige Folien eingesetzt werden bzw. die auf ihnen basierenden Rohstoffrezepturen.

Einschichtige Folien aus höher erweichenden TPE, Verfahren zu ihrer Herstellung sowie ihre Verwendung sind nach dem Stand der Technik beispielsweise aus der EP 675167 oder der EP 591782 (Wolff Walsrode) bekannt. Die Folien weisen den Nachteil auf, dass sie aufgrund rascher Kristallisation nur geringe Aufweitungsverhältnisse im Blasfolienprozess zulassen. Aufgrund dieser Eigenschaften werden sie mit einem Träger aus Polyethylen coextrudiert, um das rasche Abkühlen zu vermeiden und dadurch eine stabilere Blasenform zu erhalten. Die in diesen Schriften beschriebenen Aufbauten lassen sich als höherschmelzende Schicht bzw. Schichten in Dublofolien integrieren oder sind bereits in die nach ihrer Art bekannten Dublofolien integriert worden. Folien wie beschrieben in EP1764212 weisen den Nachteil einer einer mangelnden Adhäsion zu polaren Substraten auf. Die dort beschriebenen schmelzklebrigen Schichten penetrieren nicht uasreichend in poröse Substrate.

Der vorliegenden Erfindung lag die Aufgabe zugrunde, eine reißfeste, temperaturbeständige zum Verhauten von porösen Materialien geeignete Dublofolie mittels Foliencoextrusion in einem Prozessschritt bereitzustellen, deren Deckschicht mit hoher Temperaturbeständigkeit oberhalb 170°C erweicht und deren Schmelzklebeschicht unterhalb 170°C aber oberhalb 130°C erweicht. Für ein ausreichend großes Verarbeitungsfenster in der Anwendung soll der Schmelzpunkt der niedrigschmelzenden Seite mindestens 20°C unter dem der hochschmelzenden Seite liegen. Alle Schichten müssen homogen und ohne Fließstrukturen gleichmäßig vorhanden sein um den Anforderungen zu genügen.

Wünschenswert ist ebenso ein weich flexibler Charakter, der mit einem guten Auszugsverhalten in Tiefziehprozessen einhergeht. Die Schmelzklebeschicht sollte eine möglichst universelle Klebneigung zu vielen Substraten besitzen. Wichtig ist für die höher erweichende Deckschicht zudem eine Formtreue bei höheren Temperaturen und bei diesen eine langfristige thermooxidative Stabilität besitzen.

Die erfindungsgemäße Folie soll sich so leicht wie die nach dem Stand der Technik bekannten Dublofolien mit niedrigeren Schmelzpunkten über die gebräuchlichen Maschinen führen lassen. Zudem sollen sie sich bei den für die bekannten Dublofolien üblichen Bedingungen verarbeiten lassen. Hierzu zählen insbesondere die Verarbeitung auf Thermokaschierkalandern ebenso wie die Verarbeitung auf Flachbett-Thermokaschieranlagen und die Verbindung aktivierter Dublofolien mit Substraten in einem der Aktivierungsstation nachgeschalteten Presswerk. Die Folie sollte sich gut gegen Gewebe, insbesondere Polyamid-Gewebe, kaschieren lassen und hohe Haftung erzielen.

Erfindungsgemäß gelang es, einen den genannten Anforderungen genügenden Materialverbund nach Anspruch 1 im Extrusionsprozess stabil herzustellen, der dadurch gekennzeichnet ist, dass der Verbund aus mindestens einer höherschmelzenden Schicht aus einem TPC und mindestens einer niedriger erweichenden Schicht aus einem TPU besteht.

Die Schichten aus TPU und TPC lassen sich mittels Folienextrusion ohne Einarbeitung einer weiteren Schicht einer haftvermittelnden Komponente mit hoher Verbundhaftung zusammenfügen. Die verbundenen Schichten können gegebenenfalls Minoritätskomponenten enthalten, die die Gebrauchseigenschaften modifizieren können. Die Minoritätskomponenten kommen erfindungsgemäß aus Klassen der Polymerharz-basierenden Additivkonzentrate enthaltend Wirkstoffkomponenten umfassend
- anorganische Partikel
- organische Partikel.

Die höherschmelzende Schicht aus TPC entspricht hinsichtlich ihrer Rezepturbestandteile den nach dem Stand der Technik bekannten einschichtigen Folien aus TPC oder auch TPU üblichen Komponenten.

Für die höher schmelzende bzw. höher erweichende Schicht aus TPC kommen erfindungsgemäß die Materialien zum Einsatz, die heute als Rohstoffe für die nach dem Stand der Technik bekannten einschichtigen TPC-Folien, wie sie beispielsweise unter den Handelsnamen Dureflex oder Platilon am Markt erhältlich sind, verwendet werden, wobei ihr Erweichungsbereich auf der Koflerbank über 170°C und mindestens 20 °C über dem der niedriger erweichenden Schicht liegt. Geeignete TPC werden beispielsweise unter den Handelsnamen Arnitel, Riteflex, Hytrel, Elastotec, Placcel oder Kopel angeboten.

Bevorzugt sind TPC, deren Erweichungsbereich auf der Koflerbank zwischen 180°C und 200°C liegt.

Die höher erweichende Seite besteht im Wesentlichen aus thermoplastischen Polyesterblockcopolymer, welches oberhalb 170°C auf der Koflerbank und mindestens 20 °C oberhalb der niedriger erweichenden Seite erweicht und dass mindestens eine niedrig erweichende Schicht aus mindestens einem Material aus der Gruppe der thermoplastischen Polyurethane mit einem Erweichungsbereich auf der Koflerbank zwischen 130 °C und 170°C besteht und die Materialien mittels Foliencoextrusion direkt miteinander verbunden werden.

Die Viskosität der als Matrixmaterialien der höher erweichenden Schicht geeigneten Substanzen wird günstigerweise durch den Schmelzflussindex (MFR) beschrieben. Die Schmelzflussindices für die Matrixkomponente der höher erweichenden Seite des erfindungsgemäßen Materialverbundes liegen bevorzugterweise zwischen 0,5 g/10 min, gemessen nach DIN 53 735 bei 230°C und einer Prüfmasse von 2,16 kg, und 30 g/10 min, gemessen nach DIN 53 735 bei 200°C und einer Prüfmasse von 2,16 kg, besonders bevorzugt zwischen 5 g/10 min, gemessen nach DIN 53 735 bei 230°C und einer Prüfmasse von 2,16 kg und 20 g/10 min, gemessen nach DIN 53 735 bei 200°C und einer Prüfmasse von 2,16 kg.

Erfindungsgemäß bevorzugt sind die jeweils leichter verformbaren TPC Einstellungen, charakterisiert durch den geringeren Elastizitätsmodul bzw. die Shore-Härte. Bevorzugt sind TPC-Harze mit einer Shore D Härte, gemessen nach DIN 53505, kleiner 60.

Bevorzugt sind TPC, deren Polyester-Hartsegment vorrangig aus Terephthalsäure und Butandiol-Einheiten gebildet wird.

Als Ausgangsmaterialien für die Matrixkomponente der niedriger schmelzenden bzw. niedriger erweichenden Seite sind die entsprechenden gängigen thermoplastischen Polyurethane der am Markt bekannten Anbieter geeignet. Thermoplastische Polyurethane aus den erfindungsgemäß geeigneten Substanzklassen werden beispielsweise unter den Handelsnamen Desmopan, Elastollan, Estane, Pellethane oder Pearlthane angeboten.

Bevorzugt sind TPU mit einer Shore A Härte zwischen 80 und 95 gemessen nach DIN 53505, besonders bevorzugt zwischen 90 und 95.

Die Viskosität der als Matrixmaterialien der niedriger erweichenden Seite geeigneten Substanzen wird günstigerweise durch den Schmelzflussindex (MFR) beschrieben. Die Schmelzflussindices für die Matrixkomponente der niedriger erweichenden Seite des erfindungsgemäßen Materialverbundes liegen bevorzugterweise zwischen 1g/10 min und 30 g/10 min, gemessen nach DIN 53 735 bei 190°C und einer Prüfmasse von 8,7 kg.

Für eine besonders bevorzugte Ausführungsform wird als Material für die niedrigerweichende Seite ein Material aus der Gruppe der Ester-TPU eingesetzt.

Der Erweichungsbereich der auf der niedriger erweichenden Folienseite eingesetzten TPU liegt zwischen 130°C und 170°C, besonders bevorzugt zwischen 140°C und 160°C.

Eine bevorzugte Ausführung der erfindungsgemäßen Materialverbunde sind Folien mit einer Gesamtdicke zwischen 20 µm und 200 µm. Die Dicke der höherschmelzenden Seite wird so gewählt, dass sie bei Wärmeeintrag unter Verarbeitungsbedingungen nicht wesentlich erweichen wird. Ihre Dicke liegt geeigneterweise zwischen 10 µm und 150 µm. Die Dicke der niedriger erweichenden Seite wird in Abhängigkeit des zu bedeckenden Substates so gewählt, dass eine optimale Verklebung erreicht wird. Für stark poröse Substrate wird i.a. eine größere niedrig erweichende Schichtendicke gewählt, damit auch bei ungleichmässiger Oberfläche des Substrates und dadurch bedingtem teilweisen Wegfließen der Schmelzklebstoffschicht eine möglichst große Verklebungsfläche geschaffen wird. Bei glatten Substraten genügt dagegen eine geringere Schmelzklebedicke. Deshalb ist auch für die niedriger erweichende Seite ein Dickenbereich zwischen 10 µm und 150 µm erfindungsgemäß geeignet.

Erfindungsgemäß besonders bevorzugt ist die Herstellung im Blasfolienprozeß, da bei diesem Prozess nur geringe Spannungen im Verbund verbleiben und somit wenig Relaxationen bei Wiederaktivierung erfolgen.

In einer bevorzugten Ausführungsform besteht diese Folie aus mindestens zwei Schichten, wobei sowohl die Folien-Seite aus höher erweichendem TPC als auch die niedrigschmelzende Folienseite aus TPU können gegebenenfalls jeweils aus mehreren Einzelschichten ausgeführt sein.

In einer bevorzugten Ausführungsform wird die Folie zusätzlich mit einem Träger aus LDPE coextrudiert um große Aufweitungen im Blasfolienprozess stabil zu ermöglichen. LDPE bietet hierbei den Vorteil auch bei höheren Temperaturen schmelzestabil zu bleiben und die Relaxationsneigung zu reduzieren.

Der erfindungsgemäße Materialverbund eignet sich zum Abdichten poröser Werkstoffe ebenso wie zur Ausstattung von Gegenständen mit einer Oberfläche aus TPC. Hierbei wird durch die außerordentlichen Eigenschaften der eingesetzten TPC eine Aufwertung hinsichtlich der Oberflächengüte in Bezug auf die Abrieb- und Kratzbeständigkeit erreicht.

In einer bevorzugten Anwendung wird eine erfindungsgemäß besonders bevorzugte Folie gegen poröse Substrate geklebt. Hierzu wird derart verfahren, dass zur Kaschierung oder Abdichtung von porösen Substraten, insbesondere Schaumkunststoffen, textilen Materialien, Nähten, Vliesstoffen, Leder und/oder Spaltleder mit der erfindungsgemäßen Dublofolie, die niedriger erweichende Seite der Folie auf oder über ihren Erweichungsbereich erwärmt wird und die mehrschichtige Folie mit dem Substrat in Verbindung gebracht und gegebenenfalls unter Anwendung zusätzlichen Druckes verklebt wird, wobei die erweichte Seite mit dem niedrigeren Erweichungsbereich dem Substrat zugewandt ist.

Der Wärmeeintrag in die Schicht mit niedrigerem Erweichungsbereich kann beispielsweise durch Warmluft, Thermostrahler und/oder beheizte Walzen erfolgen. Dies kann direkt in die niedriger erweichende Schicht oder durch die höher erweichende Schicht hindurch erfolgen. Erfindungsgemäß bevorzugt ist der Wärmeeintrag direkt in die niedriger erweichende Schicht. Vor der Applikation des erfindungsgemäßen Materialverbundes kann diese einer thermischen Voraktivierung unterzogen werden.

Die Abdichtung mit den erfindungsgemäßen Verbunden kann durch Thermokaschierung erfolgen, wobei der Verbund ohne zusätzliche Trennschichten gehandhabt werden kann. Die Thermokaschierung wird durch den Wegfall der Trennschicht ökonomisch gegenüber Dublofolien mit Trennschicht begünstigt. Wird seitens des Anwenders jedoch eine steifere Trägerschicht zur besseren Handhabung gewünscht oder ist eine große Breite notwendig, so lässt sich auch der erfindungsgemäße Materialverbund auf der höher erweichenden Seite mit einer zusätzlichen Trägerschicht aus Polyethylen versehen, die nicht haftfest mit der Seite aus Polyester-TPC verbunden ist.

Die Thermokaschierung mit den erfindungsgemäßen Materialverbunden bietet zudem eine durch eine andere Technologie und den mehrschichtigen Aufbau bedingte erhöhte Verarbeitungssicherheit gegenüber der Bildung von Löchern oder Pinholes, die bei der Flammkaschierung durch Durchbrenner hervorgerufen werden, so dass verminderte Schichtdicken realisierbar werden. Letztere stellen einen weiteren ökonomischen und ökologischen Vorteil der erfindungsgemäßen Dublofolie dar.

Eine ebenso bevorzugte Verwendung ist der Einsatz zur Nahtabdichtung vernähter, abgesehen von den Nähten in der Fläche bereits abgedichteter Gebilde, insbesondere von Folien-kaschierten Textilien, Textil/Vlies- und/oder Textil/Schaum-Verbunden. Die genannten Folien-kaschierten Aufbauten können sowohl durch Flamm- oder Thermokaschierung hergestellt worden sein. Durch Vernähung verknüpfte Aufbauten können sowohl durch den Einsatz erfindungsgemäßer Materialverbunde gegen den Durchtritt von Fluiden im Bereich der Nähte geschützt werden. Zur Abdichtung von Nähten werden bevorzugt schmale Streifen der erfindungsgemäßen Dublofolien, sogenannte Tapes, eingesetzt. Die Breite von Tapes liegt bevorzugterweise zwischen 20 mm und 50 mm.

Die Nähte der oben genannten Aufbauten können, in Abhängigkeit von der Gestaltung der Naht, von den erfindungsgemäßen Verbunden umschlosssen oder lediglich abgedeckt werden. Bei der Nahtabdichtung erfolgt die Verklebung der niedriger schmelzenden Seite in Form der erfindungsgemäß bevorzugten Dublofolie üblicherweise auf die Folien-kaschierte Seite der oben genannten Aufbauten. Im Bereich der Nahtüberkreuzungen erfolgt die Abdichtung der die zuerst abgedichte Naht kreuzenden zweiten Naht auch über die Verklebung der niedriger schmelzenden Seite der Dublofolie für die zweite Naht mit der höherschmelzenden Seite der für die Abdichtung der ersten Naht eingesetzten Folie.

Die erfindungsgemäßen Folien können mit den bekannten physikalischen und chemischen Behandlungsmethoden wie beispielsweise der Corona-Behandlung ein- oder beidseitig in ihren Oberflächeneigenschaften modifiziert werden.

Die im Rahmen der nachfolgenden Beispiele und Vergleichsbeispiele beschriebenen Materialverbunde wurden durch Blasfoliencoextrusion hergestellt. Die zum Aufschluss thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

Die Erfindung soll anhand der nachfolgenden Beispiele näher erläutert werden.

### Beispiele

### Beispiel A:

Mit Hilfe eines Dreischicht-Blasfolienwerkzeuges wurde eine Folie hergestellt, deren höherschmelzende Schicht aus einem handelsüblichen TPC der Shore-D-Härte 55 gebildet wurde. Das Hartsegment dieses Copolyesters wurde aus 1,4 Butandiol und Dimethylterephthalat umgeestert, das Weichsegment bestand aus Polytetramethylen- Glycol. Der MFI betrug 15 g/10 min bei 230°C und einer Prüfbelastung von 2,16 kg. Die Dichte lag bei 1,20 g/cm³.

Dieser 20 µm dicken Schicht wurde 5% schwarzes Ruß-Masterbatch zugesetzt. Sämtliche für diese Schicht eingesetzten Komponenten wurden gemeinsam in einem Extruder aufgeschmolzen und dem mittleren Wendelverteiler des Blasfolienwerkzeugs zugeführt.

Die niedriger erweichende Schicht wurde aus einem Ester-TPU der Shore-A Härte 92 gebildet, dessen MFI 18g/10 min bei 190°C und einer Prüfbelastung von 8,7 kg lag.

Sämtliche für diese Schicht eingesetzten Komponenten wurden gemeinsam in einem Extruder aufgeschmolzen und dem äüßeren Wendelverteiler des Blasfolienwerkzeugs zugeführt.

Als dritte Schicht wurde ein LDPE mit einem MFI von 0,4 g/10 min bei 190°C und einer Prüfbelastung von 2,16 kg. Die Dichte Des LDPE lag bei 0,92g/cm³. Dieses wurde mit einem dritten Extruder aufgeschmolzen und der Schmelzestrom dem inneren Wendelverteiler zugeführt.

Alle drei Schmelzeströme wurden in einem Dreischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

### Beispiel B:

Mit Hilfe eines Zweischicht-Blasfolienwerkzeuges wurde eine Folie hergestellt, deren höherschmelzende Schicht aus einem handelsüblichen TPC der Shore-D-Härte 40 gebildet wurde. Das Hartsegment dieses Copolyesters wurde aus 1,4 Butandiol und Dimethylterephthalat umgeestert, das Weichsegment bestand aus Polytetramethylen- Glycol. Der MFI betrug 17 g/10 min bei 200°C und einer Prüfbelastung von 2,16 kg. Die Dichte lag bei 1,15 g/cm³.

Dieses TPC wurde mit üblichen Stabilisatoren in einem Extruder aufgeschmolzen und zu einer 25 µm dicken Schicht ausgeformt. Die niedriger erweichende Schicht wurde aus einem Ester-TPU der Shore-A-Härte 86 gebildet. Der MFI betrug 20g/10 min bei 190°C und 8,7 kg.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

Prüfungen an den im Rahmen der Beispiele und Vergleichsbeispiele hergestellten Mustern:

### Zugversuch

Der Zugversuch an den im Rahmen der Beispiele und Vergleichsbeispiele hergestellten Folien wurde nach ISO 527 durchgeführt. Die Prüfkörper wurden jeweils längs und quer zur Laufrichtung aus der Folie geschnitten.

### Erweichungsbereich

Den angegebenen Werten für den Erweichungsbereich auf der Kofler-Heizbank liegt die im folgenden beschriebene Hausmethode zugrunde. Auf eine Kofler-Heizbank werden (Folien-) Stücke des zu untersuchenden Kunststoffs mit einer Grundfläche von mindestens 1 mm² gelegt. Nachdem diese Stücke mindestens 60 sec auf der Kofler-Heizbank gelegen haben, wird mit einem Skalpell festgestellt, bei welcher Position der Heizbank sich die Kunststoff-Teststücke ohne Einwirkung einer großen Kraft von der Seite her plastisch verformen lassen. Die Position auf der Kofler-Heizbank wird dann mit der Temperatur korreliert. Die an verschiedenen Teststücken ermittelten Maximal- und Minimal-Werte geben das obere und untere Ende des Erweichungsbereiches an.

### Verbundhaftung

Unter Verbundhaftung wird der Maximalwert der Kraft verstanden, der notwendig ist, um die zu prüfende Folie von einem Prüfstreifen in 15 mm Breite auf eine Länge von 10 mm unter einem Trennwinkel von 90° spaltend zu trennen. Die Verbundhaftung wird in N/Probenbreite angegeben. Der Abzugswinkel beträgt 90°, die Abzugsgeschwindigkeit 100 mm/min.

Die in der nachfolgenden Tabelle wiedergegebenen, die Folien hinsichtlich der erfindungsgemäßen Eigenschaften charakterisierenden Daten zeigen deutlich, dass die in den Beispielen beschriebenen erfindungsgemäßen Materialverbunde den im Rahmen der Vergleichsbeispiele dargestellten Verbunden im Vorteil sind.

### Schälfestigkeit

Unter Schälfestigkeit wird die Kraft verstanden, die notwendig ist, um die zu prüfende Folie von einem Substrat zu trennen, mit dem sie vorher verbunden wurde. In diesem Fall wurde die Folie auf einer Heisspresse bei 150°C und einem Druck von 1,5 bar gegen ein Polyamidgewebe verpresst. Eine 50 mm breite Probe des Laminats wird so in eine Zugprüfmaschine eingespannt, dass in der einen Klemmbacke die reine Folie und in der anderen das Gewebe gespannt ist. Die gemessene mittlere Trennkraft wird als Schälfestigkeit angegeben.

**Tabelle 1: Eigenschaften der im Rahmen der Beispiele und Vergleichsbeispiele hergestellten Folien**

| **Eigenschaft** | **Bestimmungsmethode** | **Einheit** | **Beispiel A** | **Beispiel B** |
|---|---|---|---|---|
| Modul 100% längs/quer | ISO 527 | MPa | 12/12 | 9/9 |
| Modul 50% längs/quer | ISO 527 | MPa | 11/11 | 5/8 |
| Verbundhaftung | DIN 53357 | N/15 mm | Nicht trennbar | Nicht trennbar |
| Schälfestigkeit | | N | 45 | 40 |
| Erweichungsbereich niedriger schmelzende Seite | Koflerbank Skalpell Hausmethode | °C | 150 - 155 | 140 - 145 |
| Erweichungsbereich / höher schmelzende Seite | Koflerbank Skalpell Hausmethode | °C | 185 - 190 | 170 - 175 |
| Bruchdehnung längs/quer | ISO 527 | % | 420 / 450 | 430/450 |
| Bruchspannung längs/quer | ISO 527 | MPa | 39 / 34 | 43/42 |
| Weiterreißwiderstand | ISO 34-1 | kN/m | 90/95 | 70/75 |

Die aus dem Schälfestigkeits- und dem Verbundhaftungsversuch erhaltenen Werte belegen, dass die erfindungsgemäßen Folien für den Einsatz geeignetet sind.

Die im Zugversuch erhaltenen Werte zur Spannung bei niedrigen Dehnungen zeigen zudem für die erfindungsgemäße Verwendung als Schutzfolien für Dämmstoffmaterialien vorteilhaft flexible Eigenschaften der erfindungsgemäßen Materialverbunde. Bei den durch Blasfoliencoextrusion hergestellten Verbunden verbleiben nur geringe Spannungen und somit wenig Relaxationen bei Wiederaktivierung.

## Patentansprüche

1. Materialverbund mit einer niedriger und einer höher erweichenden Seite, **dadurch gekennzeichnet, dass** der Verbund aus mindestens einer hocherweichenden Schicht aus thermoplastischem Copolyesterelastomer TPC und einem mindestens 20°C niedriger erweichenden Hotmelt-Material aus den Substanzklassen der warmklebrigen thermoplastischen Polyurethane (TPU) besteht und mittels Foliencoextrusionsverfahren hergestellt wurde, wobei der Erweichungsbereich der auf der niedriger erweichenden Seite eingesetzten TPU auf der Koflerbank zwischen 130°C und 170°C beträgt und der Erweichungsbereich des auf der höher erweichenden Seite eingesetzten TPC auf der Koflerbank oberhalb von 170°C liegt und die Erweichungsbereiche nach der Methode in der Beschreibung bestimmt werden.

2. Materialverbund nach Anspruch 1, **dadurch gekennzeichnet, dass** die höher erweichende Seite aus thermoplastischen Polyesterblockcopolymer mit Polyether Blocksegmenten basierend auf Polytetramethylen- Glycol besteht und ihr Erweichungsbereich auf der Koflerbank zwischen 170°C und 215°C, besonders bevorzugt zwischen 175°C und 200°C liegt.

3. Materialverbund nach einem der Ansprüche 1 bis 2, **dadurch gekennzeichnet, dass** die höher erweichende Seite aus thermoplastischen Polyesterblockcopolymer besteht, wobei die Polyesterblöcke aus Butandiol- und Terephthalsäure-Bausteinen gebildet sind.

4. Materialverbund nach einem der Ansprüche 1 bis 3, **dadurch gekennzeichnet, dass** die Schmelzflussindices für die Matrixkomponente der höher erweichenden Seite des erfindungsgemäßen Materialverbundes bevorzugterweise zwischen 0,5 g/10 min, gemessen nach DIN 53 735 bei 230°C und einer Prüfmasse von 2,16 kg, und 30 g/10 min, gemessen nach DIN 53 735 bei 200°C und einer Prüfmasse von 2,16 kg, besonders bevorzugt zwischen 5 g/10 min, gemessen nach DIN 53 735 bei 230°C und einer Prüfmasse von 2,16 kg und 20 g/10 min, gemessen nach DIN 53 735 bei 200°C und einer Prüfmasse von 2,16 kg, liegen.

5. Materialverbund nach einem der Ansprüche 1 bis 4, **dadurch gekennzeichnet, dass** der Erweichungsbereich der auf der niedriger erweichenden Seite eingesetzten TPU zwischen 140°C und 160°C, besonders bevorzugt zwischen 140°C und 155°C beträgt.

6. Folie bestehend aus dem Materialverbund nach einem der Ansprüche 1 bis 5, **dadurch gekennzeichnet, dass** für die jeweiligen Seiten der Folie Harze mit einer Shore D Härte, gemessen nach DIN 53505, kleiner 60 Verwendung finden.

7. Folie bestehend aus dem Materialverbund nach einem der Ansprüche 1 bis 6, **dadurch gekennzeichnet, dass** die höher schmelzende Copolyester-Seite und die niedriger schmelzende TPU-Seite aus jeweils einer Einzelschicht aufgebaut sind.

8. Folie bestehend aus dem Materialverbund nach einem der Ansprüche 1 bis 7, **dadurch gekennzeichnet, dass** die höher schmelzende Copolyester Seite und/oder die niedriger schmelzende TPU-Seite aus mehreren Einzelschichten aufgebaut sind.

9. Folie bestehend aus dem Materialverbund nach einem der Ansprüche 1 bis 8, **dadurch gekennzeichnet, dass** sie beim Extrusionsprozess auf der höher erweichenden Seite aus thermoplastischen Polyesterblockcopolymer zusätzlich mit einer nicht haftfest verbundenen Trägerschicht aus Polyethylen coextrudiert wird.

10. Folie bestehend aus dem Materialverbund nach einem der Ansprüche 1 bis 9, **dadurch gekennzeichnet**, das sie eine Gesamtdicke zwischen 20 µm und 200 µm hat, wobei die Dicke der höher erweichenden Seite zwischen 1.0 µm und 150 µm und die Dicke der niedriger erweichenden Seite zwischen 10 µm und 150 µm beträgt.

11. Verfahren zur Kaschierung oder Abdichtung von porösen Substraten, insbesondere Schaumkunststoffen, textilen Materialien, Nähten, Vliesstoffen, Leder und/oder Spaltleder mit einer Dublofolie nach einem der Ansprüche 1 bis 10, **dadurch gekennzeichnet, daß** die niedriger erweichende Seite der Folie auf oder über ihren Erweichungsbereich erwärmt wird und die mehrschichtige Folie mit dem Substrat in Verbindung gebracht und verklebt wird, wobei die erweichte Seite mit dem niedrigeren Erweichungsbereich dem Substrat zugewandt ist.

## Claims

1. Material composite having a relatively low softening point side and a relatively high softening point side, **characterized in that** the composite consists of at least one layer of relatively high softening point thermoplastic copolyester elastomer TPC and
a hot melt material from the substance classes of the heat-activated thermoplastic polyurethane adhesives (TPU) having an at least 20°C lower softening range and was produced by film coextrusion processes, wherein the softening range of the TPU employed on the lower softening point side is between 130°C and 170°C on the Kofler bench and the softening point of the TPC employed on the higher softening point side is above 170°C on the Kofler bench and the softening ranges are determined according to the method in the description.

2. Material composite according to Claim 1, **characterized in that** the higher softening point side consists of thermoplastic polyester block copolymer comprising polyether block segments based on polytetramethylene glycol and has a softening range on the Kofler bench between 170°C and 215°C, particularly preferably between 175°C and 200°C.

3. Material composite according to either of Claims 1 and 2, **characterized in that** the higher softening point side is made of thermoplastic polyester block copolymer, wherein the polyester blocks are formed from butanediol and terephthalic acid building blocks.

4. Material composite according to any of Claims 1 to 3, **characterized in that** the melt flow indices for the matrix component of the higher softening point side of the material composite according to the invention are preferably between 0.5 g/10 min measured according to DIN 53 735 at 230°C and a test mass of 2.16 kg and 30 g/10 min measured according to DIN 53 735 at 200°C and a test mass of 2.16 kg, particularly preferably between 5 g/10 min measured according to DIN 53 735 at 230°C and a test mass of 2.16 kg and 20 g/10 min measured according to DIN 53 735 at 200°C and a test mass of 2.16 kg.

5. Material composite according to any of Claims 1 to 4, **characterized in that** the softening range of the TPU employed on the lower softening point side is between 140°C und 160°C, particularly preferably between 140°C and 155°C.

6. Film consisting of the material composite according to any of Claims 1 to 5, **characterized in that** for the respective sides of the films resins having a Shore D hardness measured according to DIN 53505 of less than 60 are used.

7. Film consisting of the material composite according to any of Claims 1 to 6, **characterized in that** the higher melting point copolymer side and the lower melting point TPU side are each constructed from one individual layer.

8. Film consisting of the material composite according to any of Claims 1 to 7, **characterized in that** the higher melting point copolyester side and/or the lower melting point TPU side are constructed from a plurality of individual layers.

9. Film consisting of the material composite according to any of Claims 1 to 8, **characterized in that** in the extrusion process on the higher softening point side said film is coextruded from thermoplastic polyester block copolymer together with a non-adhesively bonded carrier layer of polyethylene.

10. Film consisting of the material composite according to any of claims 1 to 9, **characterized in that** it has a total thickness between 20 µm and 200 µm, wherein the thickness of the higher softening point side is between 10 µm and 150 µm and the thickness of the lower softening point side is between 10 µm and 150 µm.

11. Process for laminating or sealing porous substrates, in particular foamed plastics, textile materials, seams, nonwovens, leather and/or split leather with a duplex film according to any of Claims 1 to 10, **characterized in that** the lower softening point side of the film is heated to or above its softening range and the multilayered film is contacted with the substrate and stuck together, wherein the soft side having the lower softening range faces the substrate.

## Revendications

1. Matériau composite comprenant un côté ramollissant à une température plus basse et un côté ramollissant à une température plus élevée, **caractérisé en ce que** le composite est constitué par au moins une couche ramollissant à une température élevée en un élastomère de copolyester thermoplastique TPC et un matériau thermofusible ramollissant à une température au moins 20 °C plus basse des classes de substances des polyuréthanes thermoplastiques adhésifs à chaud (TPU), et a été fabriqué par un procédé de co-extrusion de feuilles, la plage de ramollissement du TPU utilisé sur le côté ramollissant à une température plus basse sur le banc de Kofler étant comprise entre 130 °C et 170 °C, et la plage de ramollissement du TPC utilisé sur le côté ramollissant à une température plus élevée sur le banc de Kofler étant située au-dessus de 170 °C, et les plages de ramollissement étant déterminées selon la méthode indiquée dans la description.

2. Matériau composite selon la revendication 1, **caractérisé en ce que** le côté ramollissant à une température plus élevée est constitué par un copolymère séquencé de polyester thermoplastique contenant des segments séquencés de polyéther à base de polytétraméthylène glycol, et sa plage de ramollissement sur le banc de Kofler est comprise entre 170 °C et 215 °C, de manière particulièrement préférée entre 175 °C et 200 °C.

3. Matériau composite selon l'une quelconque des revendications 1 à 2, **caractérisé en ce que** le côté ramollissant à une température plus élevée est constitué par un copolymère séquencé de polyester thermoplastique, les séquences polyester étant formées par des constituants butanediol et acide téréphtalique.

4. Matériau composite selon l'une quelconque des revendications 1 à 3, **caractérisé en ce que** l'indice de fluidité à chaud pour le composant de matrice du côté ramollissant à une température plus élevée du matériau composite selon l'invention est de préférence compris entre 0,5 g/10 minutes, mesuré selon DIN 53 735 à 230 °C et avec une masse d'essai de 2,16 kg, et 30 g/10 minutes, mesuré selon DIN 53 735 à 200 °C et avec une masse d'essai de 2,16 kg, de manière particulièrement préférée entre 5 g/10 minutes, mesuré selon DIN 53 735 à 230 °C et avec une masse d'essai de 2,16 kg, et 20 g/10 minutes, mesuré selon DIN 53 735 à 200 °C et avec une masse d'essai de 2,16 kg.

5. Matériau composite selon l'une quelconque des revendications 1 à 4, **caractérisé en ce que** la plage de ramollissement du TPU utilisé sur le côté ramollissant à une température plus basse est comprise entre 140 °C et 160 °C, de manière particulièrement préférée entre 140 °C et 155 °C.

6. Feuille constituée par le matériau composite selon l'une quelconque des revendications 1 à 5, **caractérisée en ce que** des résines ayant une dureté Shore D, mesurée selon DIN 53505, inférieure à 60 sont utilisées pour les côtés respectifs de la feuille.

7. Feuille constituée par le matériau composite selon l'une quelconque des revendications 1 à 6, **caractérisée en ce que** le côté en polyester fondant à une température plus élevée et le côté en TPU fondant à une température plus basse sont chacun formés par une couche individuelle.

8. Feuille constituée par le matériau composite selon l'une quelconque des revendications 1 à 7, **caractérisée en ce que** le côté en polyester fondant à une température plus élevée et/ou le côté en TPU fondant à une température plus basse sont formés par plusieurs couches individuelles.

9. Feuille constituée par le matériau composite selon l'une quelconque des revendications 1 à 8, **caractérisée en ce qu'**elle est co-extrudée lors du processus d'extrusion sur le côté ramollissant à une température plus élevée en un copolymère séquencé de polyester thermoplastique en outre avec une couche support en polyéthylène non reliée par adhésion.

10. Feuille constituée par le matériau composite selon l'une quelconque des revendications 1 à 9, **caractérisée en ce qu'**elle présente une épaisseur totale comprise entre 20 µm et 200 µm, l'épaisseur du côté ramollissant à une température plus élevée étant comprise entre 10 µm et 150 µm, et l'épaisseur du côté ramollissant à température plus basse étant comprise entre 10 µm et 150 µm.

11. Procédé de contre-collage ou d'étanchéification de substrats poreux, notamment de matières plastiques moussées, de matériaux textiles, de joints, de non-tissés, de cuir et/ou de cuir refendu avec une feuille double selon l'une quelconque des revendications 1 à 10, **caractérisé en ce que** le côté ramollissant à une température plus basse de la feuille est chauffé dans ou au-dessus de sa plage de ramollissement, et la feuille multicouche est reliée avec le substrat et collée, le côté ramolli présentant la plage de ramollissement plus basse étant orienté vers le substrat.
